# EUROPEAN PATENT APPLICATION

(11) **EP 1 908 664 A2**
(43) Date of publication of application: **09.04.2008**
(21) Application number: 07117247.2
(22) Date of filing: 26.09.2007
(51) Int. Cl.: B62D 1/28, B62D 15/02

(54) **Systems, methods and computer products for lane keeping and handling of non-detected lane markers**

(30) Priority: 03.10.2006 US 849291 P; 05.04.2007 US 732915
(71) Applicant: Delphi Technologies, Inc., Troy, Michigan 48007 (US)
(72) Inventor: Kaufmann, Timothy Wesley, Frankenmuth, MI 48734 (US)
(74) Representative: Denton, Michael John

(57) **Abstract**

Systems and methods for detecting lane markers (2). Exemplary cmbodimcnts include systems and methods for determining an average lane width based on the lane markers (2), selecting a dominant lane marker and calculating a distance from center based on the dominant lane marker.

## Description

### TECHNICAL FIELD

The present disclosure relates generally to vehicle control systems and, more particularly, to systems and methods for center deviation lane keeping and handling of non-detected lane markers.

### BACKGROUND OF THE INVENTION

A number of vehicle systems have been devised to assist the vehicle in maintaining a central position within a driving lane. Generally, a "lane keeping" (LK) system includes a device such as a video camera that gathers information on the current position of the vehicle, along with sensors for detecting certain dynamic state variables of the vehicle. Information on the deviation of the vehicle from the center of the driving lane, as well as the dynamic state variables of the vehicle, appropriate feedback indication is provided to the driver. For example, the feedback indication could be in the form of an audio signal, a visual signal, and/or a haptic signal to the driver. In addition to driver feedback, the LK system may also be integrated within the steering system of the vehicle to provide a corrective input thereto when a path deviation is detected.

In hands-on LK systems, torque overlay is applied to the steering system to provide torque nudges that either urge the vehicle away from a lane marker ("keep out" systems) or to correct deviation from the lane center by reading lane markers on both sides of the lane ("center deviation" systems).

LK algorithms typically depend on two lines (markers) for the calculation to the valid. Lack of detection can occur due to poor marker quality or visibility. Determining the center of the vehicle in relation to the center of the lane can therefore be impaired and can interfere with center deviation calculations. For example, average width of the lane can be calculated when both markers are present. If either of the lane markers is not available, the average lane width calculation is used for the current calculation and the average is typically not updated until both markers are present. When one of the markers is not present, calculations can differ and create inaccuracies.

### SUMMARY OF THE INVENTION

Disclosed herein is an exemplary embodiment of systems and methods for detecting lane markers, determining an average lane width based on the lane markers, selecting a dominant lane marker and calculating a distance from center based on the dominant lane marker.

In another exemplary embodiment disclosed herein is a computer data signal, said computer data signal comprising code configured to cause a processor to implement a lane keeping method, including detecting lane markers, determining an average lane width based on the lane markers, discriminating and selecting between solid and dashed lane markers, selecting a dominant lane marker and calculating a distance from center based on the dominant lane marker.

In another exemplary embodiment disclosed herein is system for detecting lane markers, determining an average lane width based on the lane markers, discriminating and selecting between solid and dashed lane markers, selecting a dominant lane marker calculating a distance from center based on the dominant lane marker.

The above-described and other features will be appreciated and understood by those skilled in the art from the following detailed description, drawings, and appended claims.

### BRIEF DESCRIPTION OF THE DRAWINGS

Refer now to the figures, which are meant to be exemplary, not limiting, and wherein the like elements are numbered alike:

Figure 1 illustrates a diagram of a vehicle in a lane with markers;

Figure 2 illustrates a block diagram of a lane keeping system in accordance with an exemplary embodiment;

Figure 3 illustrates a block diagram of an exemplary methodology for determining distance from center in accordance with an exemplary embodiment;

Figure 4 illustrates a block diagram of an exemplary methodology for determining average lane width in accordance with an exemplary embodiment;

Figure 5 illustrates a block diagram of an exemplary methodology for determining the dominant marker to be used in the distance from center calculation in accordance with an exemplary embodiment;

Figure 6 illustrates a block diagram of an exemplary methodology for determining distance from center in accordance with an exemplary embodiment; and

Figure 7 illustrates a block diagram of an exemplary methodology for determining the dominant marker to be used in the distance from center calculation in accordance with an exemplary embodiment.

### DESCRIPTION OF THE PREFERRED EMBODIMENTS

In exemplary embodiments, the systems and methods described herein automatically and continually switch from the lane marker on one side of the vehicle to the other, generally depending on the availability of one or more of the markers. When the lane marker on one side of the vehicle disappears or becomes unreadable, the vehicle maintains its relationship to the extant lane marker on the other side. In this way, the dominant marker can be robustly switched and actively tracked when the other marker becomes unreadable. Exemplary systems implementing the methodology can use data from a camera to calculate lane marker positions relative to the car location in the lane. A selection of the left or right calculation can occur by the selection of a dominant marker.

The present invention may be utilized in various types of vehicles employing electronic steering or steer by wire systems or with the addition of an electric motor on a hydraulic steering system. In an exemplary embodiment, the systems and methods can be applied to an automobile employing an electric power steering system. While an exemplary embodiment is shown and described by illustration and reference to an automobile steering system, it is appreciated by those skilled in the art that the invention is not limited to the automobiles alone by may be applied to all vehicles employing electronic steering systems, steer by wire systems, or even hydraulically controlled steering systems where a lane keeping command may be integrated with existing steering commands.

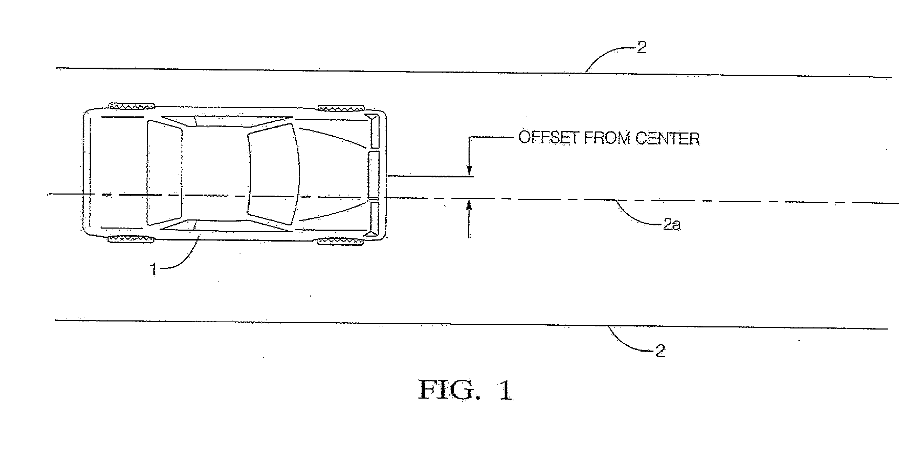

Referring now to Figure 1, there is depicted a vehicle 1 in a lane with various lane markers 2 to the left and right 2, and calculated center of lane 2a. The lane keeping systems and methods described herein can provide two modes of operation, a helper or assist mode, and an autonomous mode. In helper mode the operator is hands on, and the system provides audio warning(s) and/or tactic feedback warnings (for example, to simulate the noise/feel of a rumble strip) on the side of the vehicle that indicates the vehicle is approaching a lane marker. The warnings and cues may be overridden by activation of a turn signal indicating operator intent to change lanes. For example, in the helper (assist) mode, because application of torque nudges can cause the vehicle 1 to dart back and forth between lane markers 2 if the driver were not controlling the steering wheel, it desirable to determine if the drivers is, in fact holding the wheel. If so, then a torque nudge may be applied. As disclosed at a later point herein, a pressure/force sensor may be employed to determine if the driver is controlling the steering wheel.

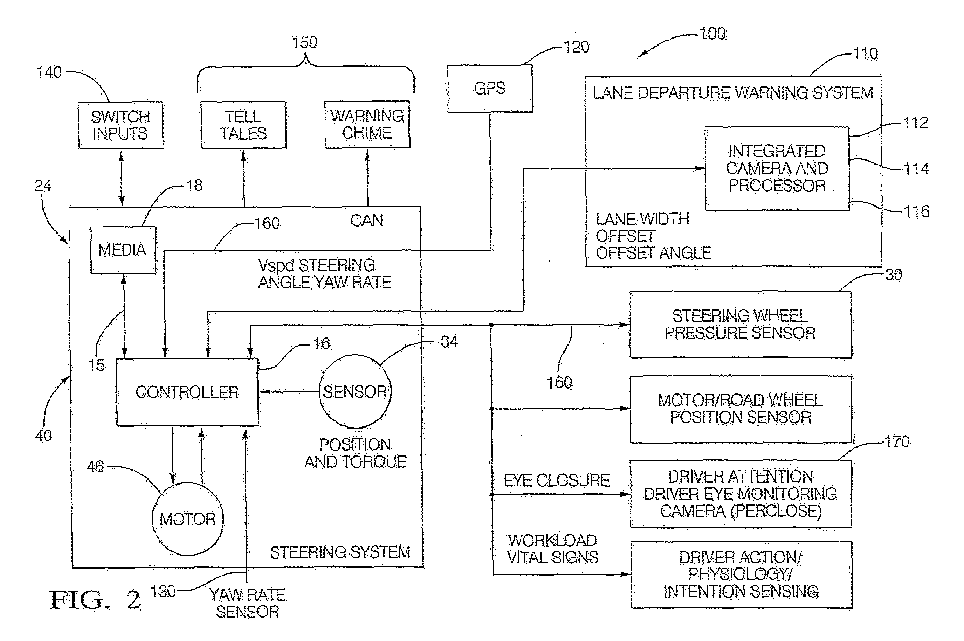

Referring also to FIG. 2, there is shown a simplified block diagram of a lane keeping system 100 in accordance with an exemplary embodiment. A lane departure warning system 110 including a lane tracking system 112 is integrated with an electric steering system 40. The lane tracking system 112 may include but not be limited to, a camera system for detection of lane markers/markings and computing a lane position signal 114. The lane keeping system 100 is also optionally integrated with auxiliary sensors such as a global positioning system (GPS with map navigation system) 120 and dynamic sensors 130 such as, but not limited to a yaw rate sensor. The lane keeping system 100 is also integrated with various controls 140 and enunciators 150 to provide indications and feedback to the operator.

The integration of GPS may be employed for route planning and navigation. Furthermore, GPS may be employed to inform the lane keeping system 100 when the vehicle 1 is approaching a defined point in the roadway, such as, an exit, but not limited thereto. Under such conditions, the lane keeping system 100 can identify the type of lane marker 2, e.g., dashed or solid. If, for example, the right line is solid, it may be inferred that the vehicle 1 is in the right most lane. The lane keeping system 100 would switch to the left line if the route planning indicates that the intention is to continue along the present course. This switch ensures that the lane keeping system 100 does not direct the vehicle 1 down the exit. If, on the other hand, it is intended to take the exit, the lane keeping system 100 would be in the right lane (if it is an right exit) and track the right most lane marker 2, to direct the vehicle 1 on to the exit.

In an exemplary embodiment, the lane keeping system also includes a driver attention-monitoring device 170. The driver attention-monitoring device 170 facilitates the lane keeping system 100 taking action when the operator's attention is not focused on the roadway. The driver attention-monitoring device 170 informs the lane keeping system 100 that the driver is at some level of drowsiness/inattentiveness. The driver attention monitoring device 170 includes, but is not limited to a camera system with infrared flood (or equivalent apparatus) to monitor the status of the operator, in particular, an operator's eyes. In one exemplary embodiment the driver attention monitoring device 170 monitors the operator's eye(s) to ascertain a percentage of eye closure. The lane keeping system 100 may then employ such a determination by to take action and provide warnings to the operator. For example, the driver attention-monitoring device 170 may be employed as an indicator when the driver has taken their eyes off the roadway for a duration exceeding a selected time.

When the driver attention-monitoring device 170 ascertains that a driver is inattentive, the lane keeping system 100 can respond with torque nudges, if the driver's hands are on the steering wheel 26 (helper (assist) mode). In addition, audible (raising and lowering of the radio may be part of this feature) and visual warnings may be activated along with steering wheel buzz (as described herein). If the driver does not take control of the vehicle 1 or the driver attention-monitoring device 170 does not indicate that the driver is awake, the lane keeping system may enter autonomous mode. The system may communicate to other systems in the vehicle 1 that the driver is not responding. The lane keeping system 100 may be integrated with other systems such as speed control and steering to slow the vehicle 1, or pull off to the side of the road and stop. Moreover in vehicles 1 equipped with OnStar® type capability, the OnStar® system may be activated. Advantageously, such systems may be highly beneficial for cases of medical emergencies, etc.

In autonomous mode the system is enabled after the operator has maintained the vehicle 1 within a tolerance band from the lane center for a selected period. The lane keeping system warns the operator of an impending engagement of the autonomous mode with a chime, and then engages. The autonomous mode maintains the vehicle 1 in the lane and requires no operator input to control the vehicle 1. In an exemplary embodiment, the lane keeping system employs a left marker as the primary marker but can readily transition to the right marker if the left marker cannot be identified. For example, in the autonomous mode, the torque sensor is used for determining driver intent. In this mode, the driver may want to make a correction and/or over ride the lane keeping system 100. So, when the driver inputs a torque greater than about 0.25 Nm, the lane keeping system 100 transitions to the helper (assist) mode. When the driver has completed his correction the lane keeping system 100 transitions back to autonomous mode when the driver is within 0.5 meters of the lane center, for five second duration, when both of these conditions have been met the lane keeping system transitions back to the autonomous mode.

Referring still to Figures 1 and 2, the lane keeping systems and methods described herein can be configured to operate with center deviation functionality. The lane keeping system responds when the vehicle 1 deviates from the center of the lane by a selected offset. When the vehicle 1 deviates, the system activates a visual warning lamp, audible warnings, and provides a torque nudge to the operator via the steering wheel in the direction away from the lane boundary line.

In an exemplary embodiment, the lane keeping system is enabled for a selected speed range of the vehicle 1. The system may be configured to operate only over a small range of total system authority and rates. In an exemplary embodiment, the lane keeping system utilizes ten percent of total system control authority. It will be appreciated that other configurations are conceivable.

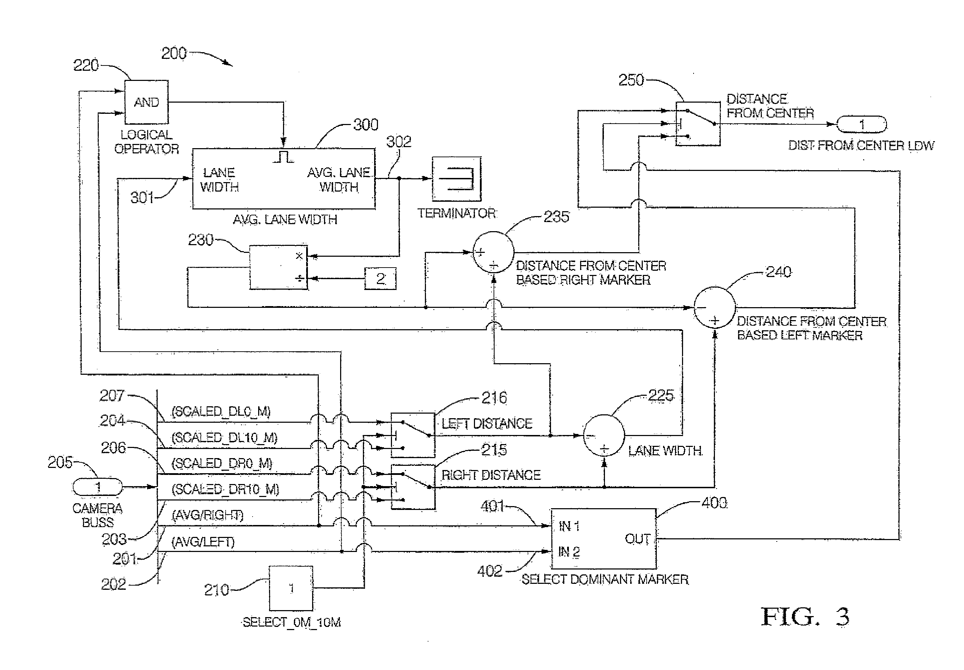

Figure 3 illustrates a block diagram of an exemplary methodology 200 for lane keeping in accordance with an exemplary embodiment. Using this methodology 200, the vehicle distance from center either based upon the left marker or the right marker is calculated. In general, camera data is received at camera buss input 205. Data includes logic data, that is, camera right data available 201 and camera left data available 202. Cameras can be set-up to either use data from 10 meter look ahead or 0 meter look ahead. Many cameras in use today provide the 0 meter look ahead. Therefore, camera input data also includes camera distance data scaled at either 0m or at 10m, determined at selector 210. For example, with selector 210 set at logic 1, scaled right and left data scaled at 0m 206, 207 can be selected, as with many modem cameras. It is understood that selector 210 can also be set at 0 for 10m scaling. It is further understood that this selector could be switched in other embodiments. Selection of camera right data 203, 206 can be selected at switch 215, based on logic 0 and logic 1, respectively. Similarly, selection of camera left data 204, 207 can be selected at switch 216, based on logic 0 and logic 1, respectively.

In general, the availability of both camera left data 204, 207 and camera right data 203, 206 is used to calculate an average lane width at block 300. The lane width is relevant for the calculation determining the position of the vehicle relative to the center of the lane and may not be available in all cases. Therefore, the average lane width block 300 is used to calculate the lane width. In one implementation, as discussed below, the average is calculated when both markers are present. This average is performed with a logic "and" block 220 on the data signals available right, and available left, that is, when camera right data available 201 and camera left data available 202 are "1", or "true". The output of the "and" block then enables to the average lane width block 300.

Furthermore, the availability and lack of availability of camera left data and camera right data is used to select the dominant marker at block 400. As discussed further below, the logic state of camera left data available 201 and camera right data available 202 is input at 401, 402 respectively.

As discussed above, if both camera right data available 201 and camera left data available 202, then logical operator returns a "true" and thus enables block 300. Lanewidth data input at 301 is calculated by taking the difference of the right and left data from switches 215, 216 at node 225. Block 300 calculates the average lane width and returns it at output 302, which is then divided at block 230. The difference between the camera right data from switch 215 and the divided output of block 230 is calculated at difference node 235. The sum of the camera left data from switch 216 and the divided output of block 230 is calculated at summation node 240. The output of nodes 235, 240 is available at switch 250. The output of switch 250 is the calculated distance from center that is used subsequently on the LK systems. Switch 250 also receives output of block 400, which provides the selection of the dominant marker for selection of the distance from center data provided from nodes 235, 240.

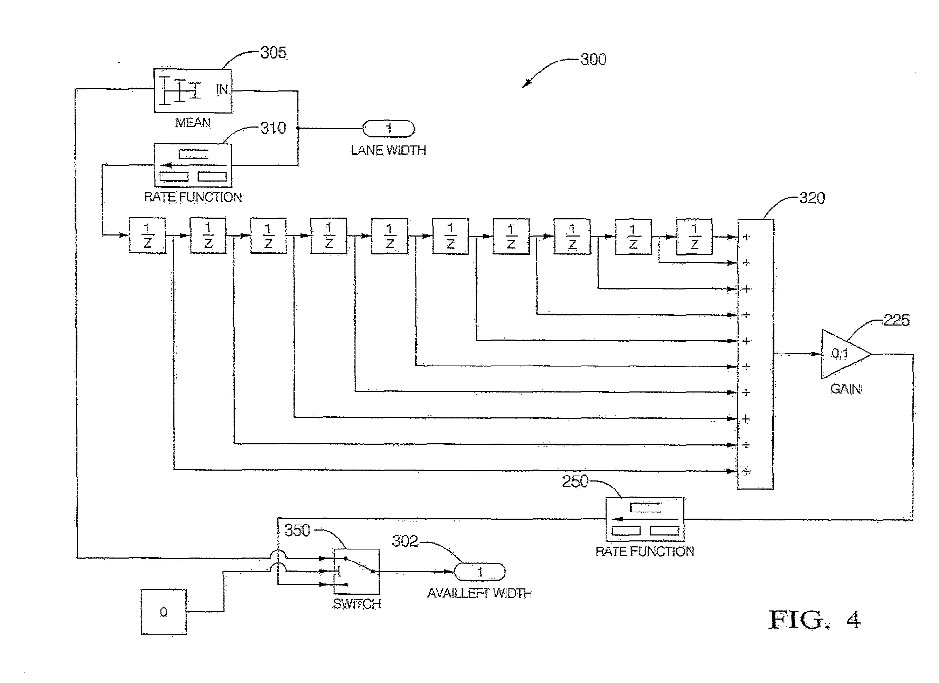

Figure 4 illustrates a block diagram of an exemplary methodology 300 for determining average lane width in accordance with an exemplary embodiment. As described above, block 300 in Figure 2 is used to calculate the average lane width when both camera right and left data is present. In one implementation, a long-term average can be calculated at mean block 305, in which a median calculation can be performed. In another implementation, a short-term average can be calculated, in which several samples can be collected for a number of cycles and then averaged over the number of cycles. For example, 10 memory elements represented by 1/z can be collected. This short-term sampling using 10 samples corresponds to 0.044 seconds/sample. The samples are added at block 320 and then divided by 10 at node 325. Rate transformation 210 converts from a faster rate, (being 0.001 prior to input) to a 0.044 s rate at which the cameras run. Rate transformation 250 converts from a slower rate 0.044 s to a faster rate 0.001 s that the rest of the model is running. The methodology could run at 0.044s or at the rate of the camera. Regardless of the type of averaging implemented, the outputs of the averages are available at switch 350 and thus to output 302 as discussed above. Switch 350 is used to choose between the short and long term averaging discussed above. In one implementation, switch 350 can be hard-coded at "0" to allow short term averaging to take place. In another implementation, switch 350 can be hard-coded to 1 to allow long-term averaging. It is understood that in other implementations switch 350 could be coded in a variety of ways to switch between the short and long term averaging, for example.

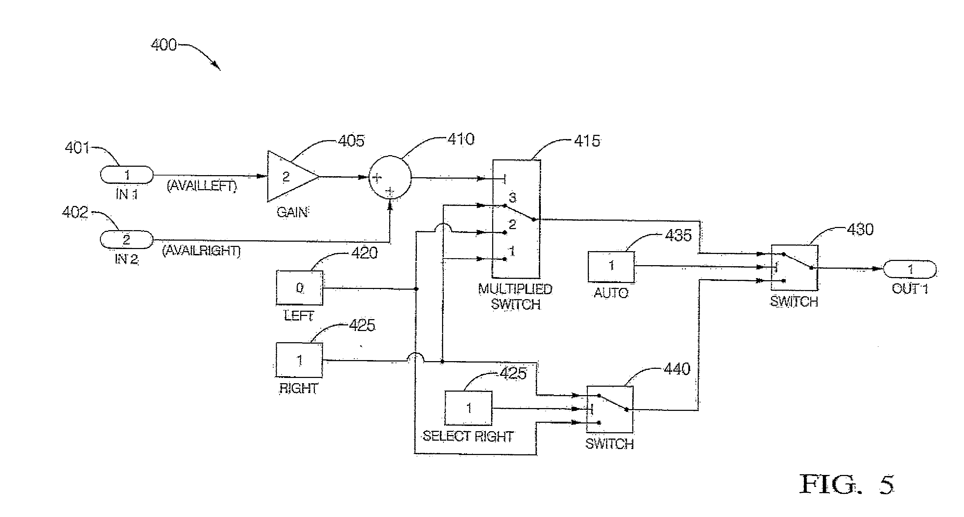

Figure 5 illustrates a block diagram of an exemplary methodology 400 for determining the dominant marker to be used in the distance from center calculation in accordance with an exemplary embodiment. As described above with respect to Figure 3, block 400 is used to select the dominant marker to use to calculate the distance from center, when one of the markers has become unavailable. Thus, the dominant marker data provided from nodes 235, 240 (Figure 3) can be selected for the distance from center at switch 250 (Figure 3). The logic data as discussed above, camera left data available 202 and camera right data available 201 data available are input at 401, 402, respectively. It is appreciated that the available logic states of the input logic data are camera left data available 401 "1" and camera right data 402 "1", camera left data available 401 "1" and camera right data 402 "0", camera left data available 401 "0" and camera right data 402 "1", and camera left data available 401 "0" and camera right data 402 "0". As discussed above, block 400 is used to determine which data is available for selection of the dominant marker for selection of which marker data to use at switch 250 in Figure 3. Therefore, the availability of camera left data 401 and camera right data 402 is determined. In one implementation, camera left data 401 passes through a gain node 405 set to apply a gain of 2. The output of node 405 and camera right data 402 are summed at node 410, the output of which is input to multi-port switch 415. Multi-port switch 415 is coded with left block 420 and right block 425.

When both camera left data 401and camera right data 402 are available, a "3" is input into multi-port switch 415. Since both marker data are available, either marker can be used as a dominant marker. As illustrated, right block 425 is chosen as the default. In other implementations, left block 420 can be used as the default. If only left data 401 is available, then a "2" is input into multi-port switch 415 and left block 420 is selected, with logic "0". If only right data 402 is available then a "1" is input into multi-port switch 415 and right block 425 is selected with logic "1".

Output of multi-port switch 415 is the dominant marker logic data that is input into switch 430, which can be hard-coded with block 435 set to "1", which allows automatic detection of the dominant marker by always selecting the output of multi-port switch 415. It is appreciated that the right/left available data provided to multi-port switch 415 allows automatic detection of dominant markers. In another implementation, manual switch 440 can be used to select which marker is to be used as the dominant marker. The output of manual switch 440 can override the automatic dominant marker selection at switch 430.

Referring again to Figure 3, the output of block 400 is used to logically select the dominant marker at switch 250. The distance from center based on either right or left marker, from nodes 235, 240, may or may not be modified by the average lane width as discussed above with respect to block 300.

As discussed above, there may be cases in which both dashed and solid lines are present as markers. In cases where both dashed and solid markers are available, additional logic may be implemented to select markers based on type. On many highways, the line type is determined based upon if it is the edge of the road or separating an additional lane. The edge of the road is marked with a solid line, while separation between lanes is marked with a dashed line. In an exemplary implementation, if both markers are available, then the dominant marker selected is the dashed line, because solid lines or road edges may confuse system 100 at exits and entrances to freeways. If the solid line were selected as the dominant marker, vehicle 1 may track the freeway in auto mode and in the warn mode. If center-based calculations are being used, system 100 may give incorrect readings.

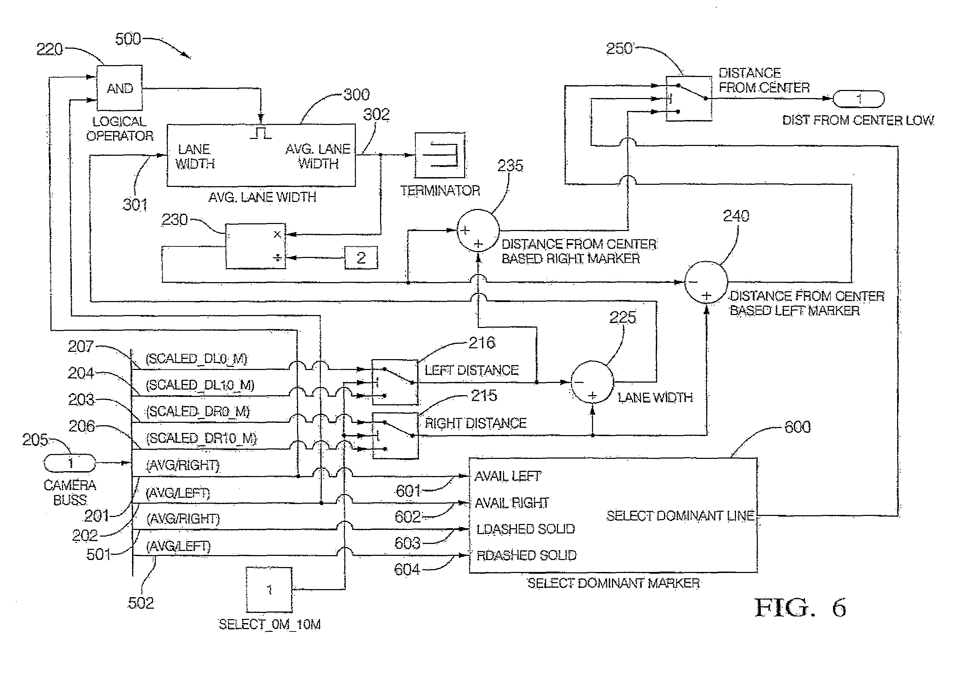

Figure 6 illustrates a block diagram of an exemplary methodology 500 for determining distance from center in accordance with an exemplary embodiment. Methodology 500 is similar to as described in Figure 3 with respect to methodology 200. Using this methodology 500, the vehicle distance from center either based upon the left marker or the right marker is calculated, taking into account the presence of dashed and solid lines. In general, camera data is received at camera buss input 205. Data includes logic data, that is, camera right data available 201 and camera left data available 202. Cameras can be set-up to either use data from 10 meter look ahead or 0 meter look ahead. Many cameras in use today provide the 0 meter look ahead. Therefore, camera input data also includes camera distance data scaled at either 0m or at 10m, determined at selector 210. For example, with selector 210 set at logic 1, scaled right and left data scaled at 0m 206, 207 can be selected, as with many modem cameras. It is understood that selector 210 can also be set at 0 for 10m scaling. It is further understood that this selector could be switched in other embodiments. Selection of camera right data 203, 206 can be selected at switch 215, based on logic 0 and logic 1 respectively. Similarly, selection of camera left data 204, 207 can be selected at switch 216, based on logic 0 and logic 1 respectively. Dashed/solid left data 501 and dashed/solid right data 502 are also input from buss input 205, and are logic inputs. In one implementation, logic "1" indicates a dashed line and logic "0" indicates a solid line.

In general, the availability of both camera left data 204, 207 and camera right data 203, 206 is used to calculate an average lane width at block 300. The lane width is relevant for the calculation determining the position of the vehicle relative to the center of the lane and may not be available in all cases. Therefore, the average lane width block 300 is used to calculate the lane width. In one implementation, as discussed below, the average is calculated when both markers are present. This average is performed with a logic "and" block 220 on the data signals available right, and available left, that is, when camera right data available 201 and camera left data available 202 are "1 ", or "true". The output of the "and" block then enables to the average lane width block 300.

Furthermore, the availability and lack of availability of camera left data and camera right data is used to select the dominant marker at block 600. As discussed further below, the logic state of camera left data available 201 and camera right data available 202 are input at 601, 602 respectively. In addition, dashed/solid left data 501 and dashed/solid right data 502 are input at 603, 604, respectively.

As discussed above, if both camera right data available 201 and camera left data available 202, then logical operator returns a "true" and thus enables block 300. Lanewidth data input at 301 is calculated by taking the difference of the right and left data from switches 215, 216 at node 225. Block 300 calculates the average lane width and returns it at output 302, which is then divided at block 230. The difference between the camera right data from switch 215 and the divided output of block 230 is calculated at difference node 235. The sum of the camera left data from switch 216 and the divided output of block 230 is calculated at summation node 240. The output of nodes 235, 240 is available at switch 250. The output of switch 250 is the calculated distance from center that is used subsequently on the LK systems. Switch 250 also receives output of block 600, which provides the selection of the dominant marker for selection of the distance from center data provided from nodes 235, 240.

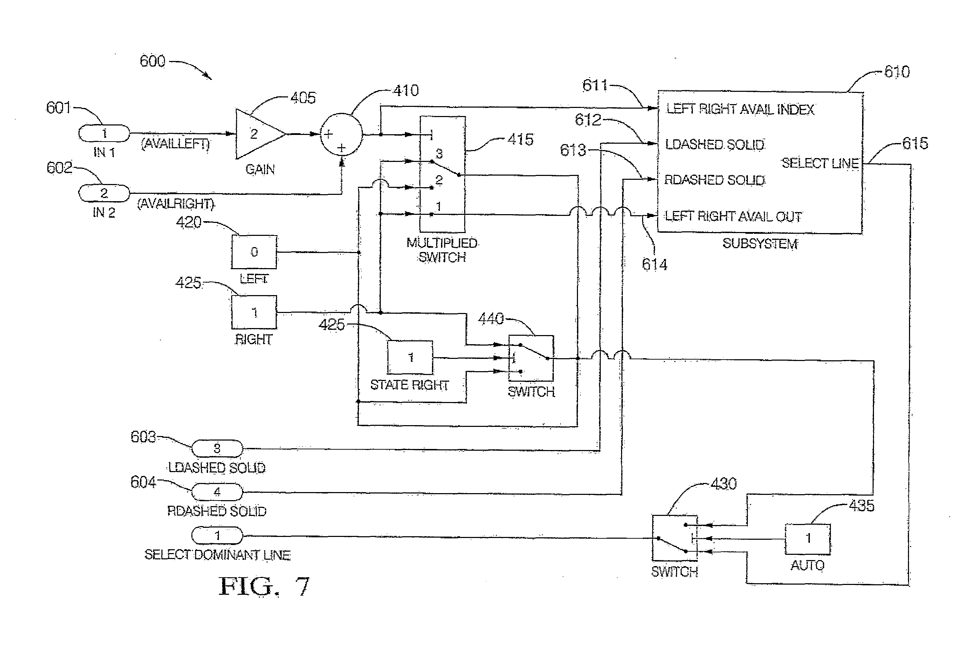

Figure 7 illustrates a block diagram of an exemplary methodology 600 for determining the dominant marker to be used in the distance from center calculation in accordance with an exemplary embodiment. As described above with respect to Figure 6, block 600 is used to select the dominant marker to use to calculate the distance from center, when one of the markers has become unavailable. Thus, the dominant marker data provided from nodes 235, 240 (Figure 6) can be selected for the distance from center at switch 250 (Figure 6). The logic data as discussed above, camera left data available 202 and camera right data available 201 data available are input at 601, 602, respectively. It is appreciated that the available logic states of the input logic data are camera left data available 601 "1" and camera right data 602 "1", camera left data available 601 "1" and camera right data 602 "0", camera left data available 601 "0" and camera right data 602 "1", and camera left data available 601 "0" and camera right data 602 "0". The logic data, as discussed above, dashed/solid left data 501 and dashed/solid right data 502 are input at 603, 604, respectively. It is appreciated that the available logic states can vary, that is, dashed and solid markers can periodically change. As discussed, the methodology allows for selection of a dashed line, when present.

As discussed above, block 600 is used to determine which data is available for selection of the dominant marker for selection of which marker data to use at switch 250 in Figure 6. Therefore, the availability of camera left data 601 and camera right data 602 is determined. In one implementation, camera left data 601 passes through a gain node 405 set to apply a gain of 2. The output of node 605 and camera right data 602 are summed at node 410, the output of which is input to multi-port switch 615. Multi-port switch 415 is coded with left block 420 and right block 425.

When both camera left data 401 and camera right data 402 are available, a "3" is input into multi-port switch 415. Since both marker data are available, either marker can be used as a dominant marker. As illustrated, right block 425 is chosen as the default. In other implementations, left block 420 can be used as the default. If only left data 401 is available, then a "2" is input into multi-port switch 415 and left block 420 is selected, with logic "0". If only right data 402 is available then a "1" is input into multi-port switch 415 and right block 425 is selected with logic "1".

Output of multi-port switch 415 is the dominant marker logic data based on the right and left marker availability. However, in the methodology 600 also takes into account whether or not the markers are dashed or solid. Subsystem 610 further determines whether or not the markers are dashed or solid and chooses not only the dominant marker present but also a dashed marker. Therefore, subsystem 610 receives as input: the output of node 410 at 611, the output of multi-switch 415 at 614; the dashed/solid left data 501as input in 603 at 612; and dashed/solid right data 502 as input 603 at 613. Subsystem 610 performs logic as follows: if both markers are present, which means the out put of multi-switch is 3 and the left marker is dashed, that is input 612 is logic "1", then the dominant marker is the left marker and output 615 is logic "0" for left. Following similar logic: if both markers are present, which means the out put of multi-switch is 3 and the right marker is dashed, that is input 613 is logic "1", then the dominant marker is the right marker and output 615 is logic "1" for right. Under remaining conditions, the dominant marker selection occurs as discussed with respect to Figure 5.

Output 615 of multi-port subsystem 610 is the dominant marker logic data based on the right and left marker availability, as well as the dashed/solid logic, as discussed, which is input into switch 430, which can be hard-coded with block 435 set to "1", which allows automatic detection of the dominant marker by always selecting the output of multi-port switch 415. It is appreciated that the right/left available data provided to multi-port switch 415 allows automatic detection of dominant markers. In another implementation, manual switch 440 can be used to select which marker is to be used as the dominant marker. The output of manual switch 440 can override the automatic dominant marker selection at switch 430.

Referring again to Figure 6, the output of block 600 is used to logically select the dominant marker at switch 250. The distance from center based on either right or left marker, from nodes 235, 240, may or may not be modified by the average lane width as discussed above with respect to block 300.

The disclosed systems and methods can be embodied in the form of computer or controller implemented processes and apparatuses for practicing those processes. It can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the method. The method may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the method. When implemented on a general-purpose microprocessor, the computer program code segments configure the microprocessor to create specific logic circuits.

It will be appreciated that the use of first and second or other similar nomenclature for denoting similar items is not intended to specify or imply any particular order unless otherwise stated. It is further appreciated that references to left and right as well as number used for logic can be interchanged and used otherwise in other implementations.

While the disclosure has been described with reference to an exemplary embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

## Claims

1. A method, comprising:
detecting lane markers (2);
determining an average lane width based on the lane markers (2);
selecting a dominant lane marker; and
calculating a distance from center based on the dominant lane marker.

2. The method as claimed in Claim 1 wherein the dominant marker is selected based on the availability of camera-left and camera-right data (201, 202, 203,204,206,207,601,602).

3. The method as claimed in Claim 2 wherein the dominant marker is selected as at least one of a marker associated with the camera-left data (202, 204, 207, 601) and a marker associated with the camera-right data (201, 203, 206, 602) in response to the availability of camera-left and camera-right data (201, 202, 203, 204,206,207,601,602).

4. The method as claimed in Claim 2 further comprising automatically selecting the dominant marker based on the availability of camera-left data and camera right data (201, 202, 203, 204, 206, 207, 601, 602).

5. The method as claimed in Claim 4 further comprising automatically switching between a marker (2) associated with the camera-left data (202, 204, 207, 601) and a marker associated with the camera-right data (201, 203, 206, 602) in response to the unavailability of at least one of the camera-left data and the camera-right data (201, 202, 203, 204, 206, 207, 601, 602).

6. The method as claimed in Claim 5 further comprising selecting between a dashed marker and a solid marker.

7. The method as claimed in Claim 6 wherein a dashed marker is selected as the dominant marker in response to the presence of both camera-left data and camera-right data (201, 202, 203, 204, 206, 207), wherein at one of the markers (2) associated with the camera-left and camera-right data (201, 202, 203, 204, 206, 207, 601, 602) is a solid marker.

8. A computer data signal, said computer data signal comprising code configured to cause a processor to implement a lane keeping method, comprising:
detecting lane markers (2);
determining an average lane width based on the lane markers (2);
discriminating and selecting between solid and dashed lane markers;
selecting a dominant lane marker; and
calculating a distance from center based on the dominant lane marker.

9. A lane-keeping and lane marker detection system for a vehicle, the system comprising:
a camera for detecting lane markers (2);
a processor coupled to the camera and having instructions to:
determine an average lane width based on the lane markers (2);
discriminate and select between solid and dashed lane markers;
select a dominant lane marker; and
calculate a distance from center based on the dominant lane marker.

10. The system as claimed in Claim 9 wherein the camera collects camera-left data and camera-right data (201, 202, 203, 204, 206, 207, 601, 602).
